# EUROPÄISCHE PATENTANMELDUNG

(11) **EP 4 173 935 A1**
(43) Veröffentlichungstag der Anmeldung: **03.05.2023**
(21) Anmeldenummer: 22204935.5
(22) Anmeldetag: 01.11.2022
(51) Int. Cl.: B62H 3/04, B62H 3/08

(54) **FAHRRAD-PARKIERSYSTEM**

(30) Priorität: 01.11.2021 CH 0704762021
(71) Anmelder: Samatra GmbH, 8610 Uster (CH); Steiner, Ralph, 8610 Uster (CH); Chapuis, Sacha, 8050 Uster (CH)
(72) Erfinder: Steiner, Ralph, 8610 Uster (CH); Chapuis, Sacha, 8050 Zürich (CH)
(74) Vertreter: P&TS SA (AG, Ltd.)

(57) **Zusammenfassung**

Die Erfindung betrifft ein Fahrrad-Parkiersystem (2, 2a-b, 6a-c, 7, 8, 9, 10ab), aufweisend 1) ein Radhalteelement (2, 2a-b) mit einem Aufnahmevolumen und zwei seitlichen Abdeckungen (2), wobei das Aufnahmevolumen dazu ausgelegt ist, ein Laufrad (3, 4, 5) eines Fahrrads so aufzunehmen, dass nach Aufnahme des Laufrads eine Laufradnabe (5) des Laufrads durch die zwei seitlichen Abdeckungen vor direktem Zugriff abgeschirmt ist, und 2) einen Schliessmechanismus (7, 7a-c), wobei der Schliessmechanismus dazu ausgelegt ist, das in das Aufnahmevolumen geführte Laufrad (3, 4, 5) zu verriegeln oder zu entriegeln, und wobei der Schliessmechanismus zwischen drei Zuständen schalten kann, wobei ein erster der drei Zustände ein Aufnahmezustand ist, in dem das Laufrad in das Aufnahmevolumen geführt bzw. aus dem Aufnahmevolumen entfernt werden kann, wobei das in das Aufnahmevolumen geführte Laufrad im ersten der drei Zustände nicht verriegelt ist, und wobei ein zweiter der drei Zustände ein Verriegelungszustand ist, in dem das in das Aufnahmevolumen geführte Laufrad durch den Schliessmechanismus verriegelt ist, und wobei ein dritter der drei Zustände ein Entriegelungszustand ist, in dem das Laufrad auf dem Aufnahmevolumen entfernt werden kann.

## Beschreibung

### Technisches Gebiet

Die Erfindung bezieht sich auf ein Fahrrad-Parkiersystem gemäss Anspruch 1.

### Stand der Technik und technischer Hintergrund der Erfindung

Ein Ausbau des öffentlichen Nah- und Fernverkehrs ist ein von wesentlichen Teilen des politischen Spektrums getragenes Ziel. Da ein öffentlicher Nah- und Fernverkehr üblicherweise entlang fixer Routen verläuft, muss ein Nutzer des öffentlichen Nah- und Fernverkehrs zu einer Haltestelle entlang einer dieser fixen Routen gelangen, um den öffentlichen Nah- und Fernverkehr zu benutzen. Weiterhin führt eine allgemein festzustellende, zumindest teilweise bereits vorhandene, Überlastung der Verkehrsinfrastruktur, der durch motorisierte Fahrzeuge hervorgerufene Lärm und die vom motorisierten Verkehr bewirkte Umweltbelastung dazu, dass ein Ausbau einer Fahrradinfrastruktur an Attraktivität gewinnt. Auch führt eine stetige technische Verbesserung der Fahrräder, z.B. im Bereich der E-Bikes, zu einer Attraktivitätssteigerung von Fahrrädern.

Um eine Haltestelle zu erreichen, kann aus verkehrstechnischen oder umweltpolitischen Gründen beispielweise ein Fahrrad verwendet werden, welches dann an der Haltestelle an einem Fahrrad-Parkiersystem abgestellt werden kann. Fahrrad-Parkiersysteme sind jedoch nicht nur an Haltestellen des öffentlichen Nah- und Fernverkehrs vorhanden, sondern auch in Schulen, Spitälern, grossen Wohneinheiten etc. Zum Abstellen und Abschliessen des Fahrrads sind aus dem Stand der Technik insbesondere rein mechanische Fahrrad-Parkiersysteme bekannt, die zwei parallel verlaufende Bügel aufweisen, wobei ein Laufrad des Fahrrads zwischen die zwei Bügel geschoben wird; das Laufrad wird anschliessend mit einem Fahrradschloss verriegelt. Bekannte Ausführungsformen von mechanischen Fahrrad-Parkiersystemen sind Vorderradhalter, Fahrradanlehnbügel, Fahrradaufhänger und Lenkerhalter.

Fahrräder, die an den aus dem Stand der Technik und der alltäglichen Umwelt bekannten mechanischen Fahrrad-Parkiersystemen abgestellt werden, sind für geübte Fahrraddiebe mitunter leicht zu entwenden. Insbesondere muss häufig nur das Fahrradschloss durchtrennt werden, oder aber das an das Fahrrad-Parkiersystem befestigte Laufrad wird abmontiert und der Rest des Fahrrads wird gestohlen. Da Fahrräder aufgrund der fortschreitenden technischen Entwicklung immer teuer werden, nehmen Diebstähle zu. Weiterhin sind aus dem Stand der Technik und der alltäglichen Umwelt bekannte mechanische Fahrrad-Parkiersysteme üblicherweise für einen Nutzer wenig komfortabel: so muss das Fahrradschloss um einen häufig sich nah am Untergrund befindlichen Bügel geführt werden - dies führt mitunter auch zu für einen Nutzer wenig vorteilhaften schmutzigen Fingern -, oder aber das Fahrrad muss im Falle von Fahrradaufhängern angehoben werden - letzteres ist insbesondere für körperlich gebrechliche Fahrradfahrer, vor allem unter Berücksichtigung des Trends zu schwereren E-Bikes, mitunter schwierig.

Es ist daher eine Aufgabe der Erfindung, ein Fahrrad-Parkiersystem bereitzustellen, der zumindest einige der Nachteile der aus dem Stand der Technik bekannten Fahrrad-Parkiersysteme beseitigt.

### Darstellung der Erfindung

Die Erfindung betrifft ein Fahrrad-Parkiersystem, das die in Anspruch 1 erwähnten Merkmale aufweist. Weitere vorteilhafte Ausführungsformen des Fahrrad-Parkiersystems sind in den abhängigen Ansprüchen angegeben.

Die Erfindung betrifft ein Fahrrad-Parkiersystem, aufweisend 1) ein Radhalteelement mit einem Aufnahmevolumen und zwei seitlichen Abdeckungen, wobei das Aufnahmevolumen dazu ausgelegt ist, ein Laufrad eines Fahrrads so aufzunehmen, dass nach Aufnahme des Laufrads eine Laufradnabe des Laufrads durch die zwei seitlichen Abdeckungen vor direktem Zugriff abgeschirmt ist, und 2) einen Schliessmechanismus, wobei der Schliessmechanismus dazu ausgelegt ist, das in das Aufnahmevolumen geführte Laufrad zu verriegeln oder zu entriegeln, und wobei der Schliessmechanismus zwischen drei Zuständen schalten kann, wobei ein erster der drei Zustände ein Aufnahmezustand ist, in dem das Laufrad in das Aufnahmevolumen geführt bzw. aus dem Aufnahmevolumen entfernt werden kann, wobei das in das Aufnahmevolumen geführte Laufrad im ersten der drei Zustände nicht verriegelt ist, und wobei ein zweiter der drei Zustände ein Verriegelungszustand ist, in dem das in das Aufnahmevolumen geführte Laufrad durch den Schliessmechanismus verriegelt ist, und wobei ein dritter der drei Zustände ein Entriegelungszustand ist, in dem das Laufrad aus dem Aufnahmevolumen entfernt werden kann.

Im ersten Zustand (Aufnahmezustand) ist der Schliessmechanismus offen: das Laufrad kann in das Aufnahmevolumen geführt werden; es ist jedoch noch nicht verriegelt. Im zweiten Zustand (Verriegelungszustand) erfolgt dann ein Schliessen und Verriegeln des in das Aufnahmevolumen geführten Laufrads. Im dritten Zustand (Entriegelungszustand) wiederum wird der Verriegelung gelöst und das Laufrad kann dem Aufnahmevolumen entnommen werden. Der erste Zustand und der dritte Zustand können auch einen gemeinsamen Zustand bilden.

In der Ausführungsform des erfindungsgemässen Fahrrad-Parkiersystems wird der Schliessmechanismus durch zwei Zangenelemente bereitgestellt, die dazu ausgelegt sind, das in das Aufnahmevolumen geführte Laufrad zu umschliessen.

Der Schliessmechanismus kann nur eine Felge bzw. einen Reifen des Laufrads, der auf der Felge angebracht sein kann, umschliessen.

In einer weiteren Ausführungsform des erfindungsgemässen Fahrrad-Parkiersystems ist der Schliessmechanismus so ausgelegt, dass die zwei Zangenelemente durch eine vom Laufrad auf eine Auflagefläche, die mit den zwei Zangenelementen mittelbar oder unmittelbar verbunden ist und auf der ein Teil des Laufrads nach Einführung in das Aufnahmevolumen aufliegt, ausgeübte Gravitationskraft bewegt werden. Der Schliessmechanismus kann so ausgebildet sein, dass sich die zwei Zangenelemente ausschliesslich beim Schalten vom Aufnahmezustand in den Verriegelungszustand und bei der Entnahme des Laufrads im Entriegelungszustand bewegen.

In einer weiteren Ausführungsform des erfindungsgemässen Fahrrad-Parkiersystems weist das Fahrrad-Parkiersystem ein Identifizierungs- und Kontrollelement aus, wobei das Identifizierungs- und Kontrollelement wenigstens dazu ausgelegt ist, durch eine Identifizierung eine Identität eines Nutzers des Fahrrad-Parkiersystems zu empfangen, und wobei das Verriegeln oder Entriegeln auf der vom Identifizierungs- und Kontrollelement empfangenen Identität eines Nutzers basiert.

In einer weiteren Ausführungsform des erfindungsgemässen Fahrrad-Parkiersystems weist der Schliessmechanismus ein elektromechanisches Schloss auf, wobei das elektromechanische Schloss so ausgelegt ist, dass nach der Identifizierung, falls der Schliessmechanismus im Aufnahmezustand ist, das Schalten vom Aufnahmezustand in den Verriegelungszustand, insbesondere durch die auf die Auflagefläche wirkende, vom Laufrad hervorgerufene Gravitationskraft bewirkt, ermöglicht ist, und dass nach der Identifizierung, falls der Schliessmechanismus im Verriegelungszustand ist, das Schalten vom Verriegelungszustand in den Entriegelungs- bzw. Aufnahmezustand, insbesondere durch ein Entfernen des Laufrads von der Auflagefläche, ermöglicht ist.

In einer weiteren Ausführungsform des erfindungsgemässen Fahrrad-Parkiersystems weist das Fahrrad-Parkiersystem ein Andockelement auf, wobei das Andockelement das Fahrrad-Parkiersystem fest mit einem Untergrund verbindet, auf dem das Fahrrad-Parkiersystem angebracht ist.

In einer weiteren Ausführungsform des erfindungsgemässen Fahrrad-Parkiersystems ist das Radhalteelement dazu ausgelegt, ein Laufrad Reifeninnendurchmesser zwischen 300 mm (12") und 740 mm (29") aufweist. Das erfindungsgemässe Fahrrad-Parkiersystem kann auch dazu ausgelegt sein, Laufräder mit einem kleineren oder grösseren Reifeninnendurchmesser aufzunehmen.

In einer weiteren Ausführungsform des erfindungsgemässen Fahrrad-Parkiersystems weist das Fahrrad-Parkiersystem eine erste, insbesondere rote, LED-Lampe (light emitting diode) und eine zweite, insbesondere grüne, LED-Lampe auf, wobei das Identifizierungs- und Kontrollelement dazu ausgelegt ist, die erste LED-Lampe und die zweite LED-Lampe zu steuern, und wobei das Identifizierungs- und Kontrollelement dazu ausgelegt ist, die erste LED-Lampe bei einem Schalten vom Aufnahmezustand in den Verriegelungszustand und im Verriegelungszustand zu aktivieren, und wobei das Identifizierungs- und Kontrollelement dazu ausgelegt ist, die zweite LED-Lampe im Aufnahme- bzw. Entriegelungszustand zu aktivieren.

In einer weiteren Ausführungsform des erfindungsgemässen Fahrrad-Parkiersystems weist das Identifizierungs- und Kontrollelement einen RFID-Leser (radio-frequency identification) auf.

In einer weiteren Ausführungsform des erfindungsgemässen Fahrrad-Parkiersystems weist das Fahrrad-Parkiersystem eine Batterie auf, die dazu ausgelegt ist, das Identifizierungs- und Kontrollelement und den Schliessmechanismus mit elektrischer Energie zu versorgen.

In einer weiteren Ausführungsform des erfindungsgemässen Fahrrad-Parkiersystems ist das Schalten vom Aufnahme- bzw. Entriegelungszustand in den Verriegelungszustand bzw. vom Verriegelungszustand in den Aufnahme- bzw. Entriegelungszustand nach der Identifizierung für eine vordefinierte Zeit möglich, die insbesondere 30 Sekunden entspricht.

### Kurze Beschreibung der Figuren

Die Erfindung wird anhand der beigefügten Figuren näher erläutert.
**Fig. 1** zeigt eine schematische Darstellung von aus dem Stand der Technik bekannten Fahrrad-Parkiersystemen;
**Fig. 2** zeigt eine seitliche schematische Darstellung einer Ausführungsform eines erfindungsgemässen Fahrrad-Parkiersystems;
**Fig. 3** zeigt eine Darstellung einer Ausführungsform eines erfindungsgemässen Fahrrad-Parkiersystems mit Schliessmechanismus; und
**Fig. 4** zeigt eine Darstellung einer Ausführungsform des Schliessmechanismus.

### Wege zur Ausführung der Erfindung

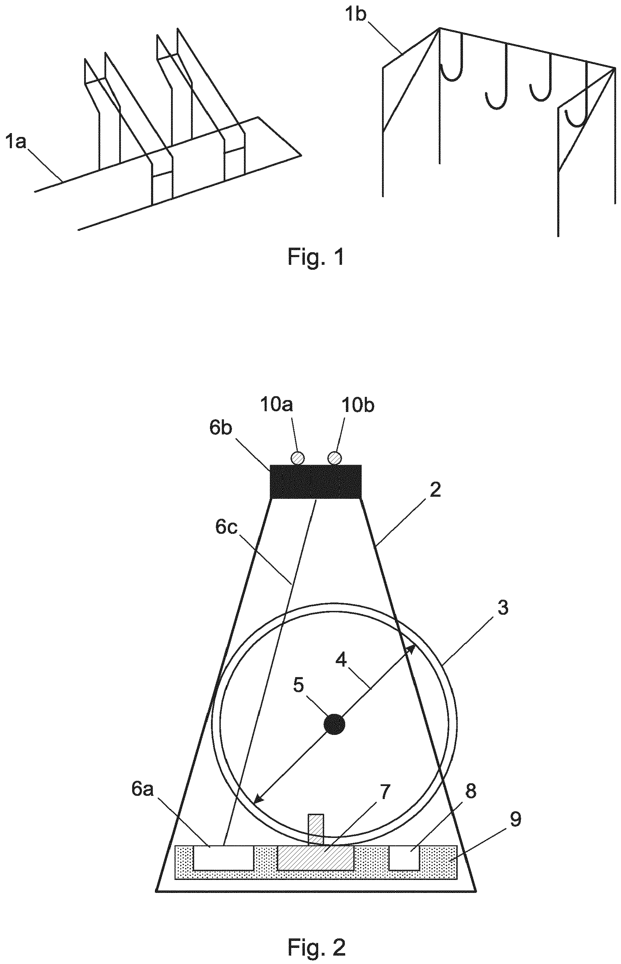

**Fig. 1** zeigt eine Darstellung von aus dem Stand der Technik bekannten Fahrrad-Parkiersystemen 1a, 1b. Ein Vorderradhalter 1a weist im Regelfall zwei parallel verlaufende Bügel auf, zwischen die ein Laufrad geschoben werden kann. Ein zwischen die zwei Bügel geschobenes Laufrad kann dann z.B. mit einem Fahrradschloss an mindestens einem der zwei Bügel befestigt werden. Ein weiteres bekanntes Fahrrad-Parkiersystem sind Fahrradaufhänger 1b. Fahrradaufhänger 1b weisen üblicherweise eine Vielzahl von Radaufhängungen mit Aufhängehaken auf, die jeweils ein Fahrrad tragen können: hierzu wird ein Laufrad, z.B. ein Vorder- oder Hinterrad des Fahrrads, an der Radaufhängung befestigt und z.B. mit einem Fahrradschloss verriegelt. Weder Vorderradhalter 1a noch Fahrradaufhänger 1b bieten einen guten Schutz vor Diebstahl, da die Laufradnabe des Laufrads, das am jeweiligen Fahrrad-Parkiersystem befestigt ist, bei beiden Fahrrad-Parkiersystemen nicht vor einem direkten Zugriff geschützt ist: insbesondere kann das befestigte Laufrad dann abmontiert werden und das restliche Fahrrad mitgenommen werden. Ein weiteres, hier nicht dargestelltes, Fahrrad-Parkiersystem sind Lenkerhalter. Ein Lenker eines Fahrrads kann auf einem Lenkerhalter platziert werden. Die Lenkerhalter sind üblicherweise an einer weiteren Stange befestigt, und ein am Lenkerhalter positioniertes Fahrrad kann mit der weiteren Stange mit einem Schloss verbunden werden. Neben solchen rein mechanischen Fahrrad-Parkiersystemen sind im Stand der Technik auch Fahrrad-Parkiersysteme bekannt, die mit Elektronik ausgestattet sind und beispielsweise elektromechanische Schliessmechanismen aufweisen.

**Fig. 2** zeigt eine seitliche schematische Darstellung einer Ausführungsform eines erfindungsgemässen Fahrrad-Parkiersystems 2, 6a-c, 7, 8, 9, 10a-b. Das Fahrrad-Parkiersystem weist ein Radhalteelement 2, ein Identifizierungs- und Kontrollelement 6a-c und einen Schliessmechanismus 7 auf. Da Fig. 2 eine seitliche Ansicht einer Ausführungsform eines erfindungsgemässen Fahrrad-Parkiersystems zeigt, sind nicht alle Teile des Fahrrad-Parkiersystems in dieser Darstellung sichtbar. Insbesondere ist nur ein Teil des Radhaltelements 2 in Fig. 2 sichtbar, und ein durch das Radhaltelement 2 definiertes Aufnahmevolumen, in das ein Laufrad 3, 4, 5 eingeführt werden kann, ist nur implizit dargestellt. Das Radhalteelement kann als stabiler Metallständer ausgeführt werden.

Ein Laufrad 3, 4, 5 weist üblicherweise eine Felge mit Reifen 3, eine Laufradnabe 5 sowie Speichen (nicht dargestellt) auf. Ein Reifeninnendurchmesser liegt typischerweise im Bereich von 300 mm bis 740 mm. Das Radhalteelement 2 ist nun so bemessen, dass die Laufradnabe 5 eines in das Aufnahmevolumen geführten Laufrads 3, 4, 5 nach Einführung in das Aufnahmevolumen und Verriegelung durch den Schliessmechanismus 7 seitlich vom Radhaltelement 2 verdeckt wird, so dass ein direkter Zugriff auf die Laufradnabe 5 verunmöglicht wird.

Das Identifizierungs- und Kontrollelement 6a-c ist insbesondere zur Authentifizierung eines Nutzers des Fahrrad-Parkiersystems und zur Kontrolle des Schliessmechanismus 7 ausgelegt. Ein RFID-Leser (radio frequency identification) 6b kann zur Identifizierung eines Nutzers verwendet werden. Der RFID-Leser 6b ist über eine Kabelverbindung 6c mit einem Steuerungselement 6a verbunden, das dazu ausgelegt ist, den Schliessmechanismus 7 in Abhängigkeit von vom RFID-Leser empfangenen Identifizierungssignalen zu steuern. Steuerungselement 6a, RFID-Leser 6b und Schliessmechanismus 7 können von einer Batterie 8 mit Strom versorgt werden, wobei das Steuerungselement 6a, der Schliessmechanismus 7 und die Batterie 8 in einem Gehäuse 9 angeordnet sind, welches insbesondere ein Teil des Radhalteelements 2 ist. Alternativ kann ein erfindungsgemässes Fahrrad-Parkiersystem auch zwecks Energieversorgung ein Solarpanel aufweisen, und/oder ein erfindungsgemässes Fahrrad-Parkiersystem kann mit einem externen Stromnetz verbunden werden. Der RFID-Leser 6b kann mit einer dezidierten, für ein erfindungsgemässes Fahrrad-Parkiersystem speziell konstruierten, Identifikationskarte verwendet werden. Der RFID-Leser 6b kann alternativ auch mit einer bereits bestehenden Identifikationskarte verwendet werden, beispielsweise mit einer SwissPass-Kundenkarte des Verbands öffentlicher Verkehr (VöV). Alternativ kann der RFID-Leser 6b auch über eine auf einem Mobiltelefon laufende Applikation kontaktiert werden.

Der Schliessmechanismus 7 ist dazu ausgelegt, zwischen drei Zuständen zu schalten: einem Aufnahme-, Verriegelungs- und Entriegelungszustand. Im Aufnahme- bzw. Entriegelungszustand kann ein Laufrad 3, 4, 5 in das Aufnahmevolumen geführt bzw. aus dem Aufnahmevolumen entfernt werden, und im Verriegelungszustand ist das in das Aufnahmevolumen geführte Laufrad 3, 4, 5 verriegelt. Der Schliessmechanismus 7 kann so ausgebildet sein, dass ein Verriegeln nur nach einer Identifizierung eines Nutzers über den RFID-Leser 6b und gleichzeitigem Belasten des Schliessmechanismus 7 mit einem aufliegenden Laufrad 3,4, 5 durchgeführt wird. Der Schliessmechanismus 7 kann so ausgelegt sein, dass nur eine Felge mit Reifen 3 zwecks Verriegelung umfasst wird.

Ein erfindungsgemässes Fahrrad-Parkiersystem kann zwei Lampen, insbesondere eine erste rote LED-Lampe (light emitting diode) 10a und eine zweite grüne LED-Lampe aufweisen. Durch gezielte Ansteuerung der zwei Lampen durch das Identifizierungs- und Kontrollelement 6a-c kann einem potenziellen Nutzer eines erfindungsgemässen Fahrrad-Parkiersystems auf einfache Art und Weise visuell mitgeteilt werden, in welchem Zustand sich der Schliessmechanismus 7 und damit das Fahrrad-Parkiersystem zu einem bestimmten Zeitpunkt befindet. Während einem Übergang vom Aufnahme- bzw. Entriegelungszustand in den Verriegelungszustand und im Verriegelungszustand kann die rote LED-Lampe aktiviert werden, und im Aufnahme- bzw. Entriegelungszustand kann die grüne LED-Lampe aktiviert werden. Falls an einem Ort eine Vielzahl von erfindungsgemässen Fahrrad-Parkiersystemen verbaut sind, kann eine solche Zustandssignalisierung zur einfachen Auffindbarkeit nicht benutzter Fahrrad-Parkiersysteme durch einen potenziellen Nutzer beitragen. Weiterhin kann eine Aktivierung der roten LED-Lampe nach einer erfolgreichen Identifizierung (resp. beim Übergang vom Aufnahme- bzw. Entriegelungszustand in den Verriegelungszustand) dem Nutzer signalisieren, dass ein Laufrad nun innerhalb einer vorgegebenen Zeit in das Aufnahmevolumen zur Verriegelung geführt werden muss: eine solche Signalisierung kann insbesondere dann vorteilhaft sein, falls nach der Identifizierung nur innerhalb einer beschränkten vordefinierten Zeit ein Laufrad 3,4, 5 verriegelt werden kann. Zur einfachen Signalisierung, die an einen menschlichen Nutzer gerichtet ist, kann nach erfolgreicher Identifizierung das Identifizierungs- und Kontrollelement 6a-c die rote LED-Lampe während der beschränkten vordefinierten Zeit auch so ansteuern, dass die rote LED-Lampe mit einer bestimmten Frequenz blinkt. Nach der Verriegelung kann die rote LED-Lampe dann so angesteuert werden, dass sie dauerhaft leuchtet.

Ein erfindungsgemässes Fahrrad-Parkiersystem kann über ein Andockelement fest mit einem Untergrund verbunden werden. Hierdurch kann das Fahrrad-Parkiersystem selbst nur erschwert entwendet werden. Ein an einem erfindungsgemässen Fahrrad-Parkiersystem mit Andockelement befestigtes Fahrrad profitiert dadurch von einem zusätzlichen Schutz.

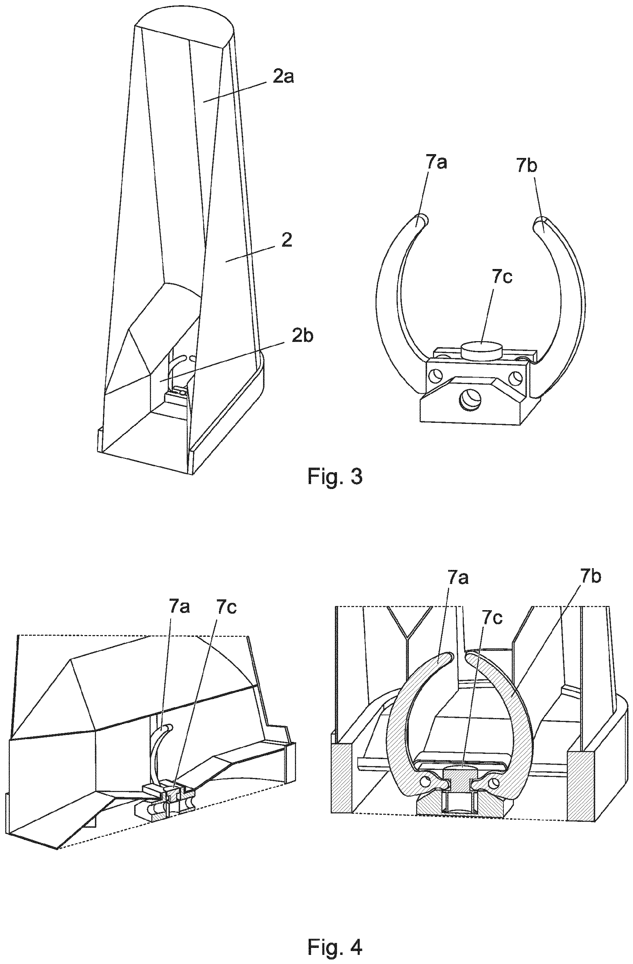

**Fig. 3** zeigt eine Darstellung einer Ausführungsform eines erfindungsgemässen Fahrrad-Parkiersystems mit Schliessmechanismus 7a-c. Das Radhalteelement 2, 2a, 2b definiert ein Aufnahmevolumen, in das ein Laufrad geführt werden kann. Das Radhalteelement kann eine Öffnung 2a aufweisen, durch die ein in das Aufnahmevolumen geführtes Laufrad nach Einführung partiell das Aufnahmevolumen verlassen kann. An seinem unteren Ende kann das Radhaltelement eine Verjüngung aufweisen, die ein eingeführtes Laufrad eng umfassen kann. Im verjüngten Teil des Radhalteelements können zwei Schlitze 2b angebracht sein (in Fig. 3 ist aus perspektivischen Gründen nur einer der zwei Schlitze 2b sichtbar - der zweite Schlitz liegt dem sichtbaren Schlitz gegenüber), durch die zwei Zangenelemente 7a, 7b des Schliessmechanismus 7a-c zwecks Verriegelung eines in das Aufnahmevolumen eingeführten Laufrads geführt werden können. Der Schliessmechanismus 7a-c kann eine Auflagefläche 7c aufweisen. Falls eine Kraft auf die Auflagefläche 7c wirkt - beispielsweise eine vom Laufrad auf die Auflagefläche 7c ausgeübte Gravitationskraft - können die zwei Zangenelemente 7a, 7b mittelbar oder unmittelbar bewegt werden: die Auflagefläche 7c kann z.B. mechanisch mit den zwei Zangenelemente 7a, 7b verbunden sein, und eine auf die Auflagefläche 7c ausgeübte Kraft kann die zwei Zangenelemente 7a, 7b in Bewegung setzen. Ein solcher die Schwerkraft ausnützender Schliessmechanismus kann zu einem einfachen Verriegeln eines Fahrrads am Fahrrad-Parkiersystem beitragen: ein Nutzer muss insbesondere manuell kein Fahrradschloss befestigen (dies wäre innerhalb des Aufnahmevolumens aufgrund platztechnischer Beschränkungen schwierig zu vollziehen); stattdessen kann es zwecks Auslösung der Verriegelung ausreichend sein, das Laufrad des abzuschliessenden Fahrrads auf die Auflagefläche 7c zu führen.

Der Schliessmechanismus 7a-c kann folgendermassen vom Identifizierungs- und Kontrollelement gesteuert werden: Falls der Schliessmechanismus im Aufnahme- bzw. Entriegelungszustand ist, können die zwei Zangenelemente 7a, 7b in den zwei Schlitzen 2b versenkt sein; die zwei Zangenelemente 7a, 7b können rein mechanisch - oder elektrisch vermittelt - am Verfahren gehindert werden. Nach einer Identifizierung kann ein Verfahren der zwei Zangenelemente 7a, 7b ermöglicht werden. Ein vom eingeführten Laufrad ausgeübtes Gewicht auf die Auflagefläche 7c kann dann die zwei Zangenelemente 7a, 7b so bewegen, dass sie die Felge mit Reifen 3 des eingeführten Laufrads umfassen. Danach können, z.B. automatisch nach einer vordefinierten Zeit nach der Identifizierung, die zwei Zangenelemente 7a, 7b an einer weiteren Bewegung gehindert bzw. gehemmt werden: das eingeführte Laufrad ist nun verriegelt und der Schliessmechanismus befindet sich im Verriegelungszustand. Eine spätere Identifizierung kann diese Bewegungshemmung lösen, und ein Aufheben des Laufrads aus dem Aufnahmevolumen führt dann zu einem Verfahren der zwei Zangenelemente 7a, 7b zurück in die zwei Schlitze 2b: der Schliessmechanismus schaltet vom Verriegelungszustand in den Aufnahme- bzw. Entriegelungszustand.

Über einen zusätzlichen Endschalter, der in einem den Schliessmechanismus vermittelnden elektromechanischen Schloss fliessende Ströme misst, kann detektiert werden, ob sich der Schliessmechanismus im Verriegelungszustand befindet oder nicht. Ein solcher zusätzlicher Endschalter kann daher zu einer erhöhten Sicherheit beitragen. Insbesondere kann ein vom zusätzlichen Endschalter bereitgestelltes Ausgangssignal an die erste, insbesondere roten LED-Lampe übertragen werden, um die rote LED-Lampe zu aktivieren.

**Fig. 4** zeigt eine Darstellung einer Ausführungsform des Schliessmechanismus 7a, 7c. Der Schliessmechanismus entspricht dem in Fig. 3 bereits gezeigten, wobei der Klarheit halber nur ein Zangenelement 7a dargestellt wird. Die Auflagefläche 7c ist flächig ausgebildet. Ein Niederdrücken der Auflagefläche, z.B. durch das Gewicht des aufliegenden Laufrads, führt zu einem Hochklappen der Zangenelemente und damit zu einem Umfassen des aufliegenden Laufrads.

## Patentansprüche

1. Fahrrad-Parkiersystem (2, 2a-b, 6a-c, 7, 8, 9, 10a-b), aufweisend
1) ein Radhalteelement (2, 2a-b) mit einem Aufnahmevolumen und zwei seitlichen Abdeckungen (2), wobei das Aufnahmevolumen dazu ausgelegt ist, ein Laufrad (3,4, 5) eines Fahrrads so aufzunehmen, dass nach Aufnahme des Laufrads eine Laufradnabe (5) des Laufrads durch die zwei seitlichen Abdeckungen vor direktem Zugriff abgeschirmt ist, und
2) einen Schliessmechanismus (7, 7a-c), wobei der Schliessmechanismus dazu ausgelegt ist, das in das Aufnahmevolumen geführte Laufrad (3,4, 5) zu verriegeln oder zu entriegeln, und wobei der Schliessmechanismus zwischen drei Zuständen schalten kann, wobei ein erster der drei Zustände ein Aufnahmezustand ist, in dem das Laufrad in das Aufnahmevolumen geführt bzw. aus dem Aufnahmevolumen entfernt werden kann, wobei das in das Aufnahmevolumen geführte Laufrad im ersten der drei Zustände nicht verriegelt ist, und wobei ein zweiter der drei Zustände ein Verriegelungszustand ist, in dem das in das Aufnahmevolumen geführte Laufrad durch den Schliessmechanismus verriegelt ist, und wobei ein dritter der drei Zustände ein Entriegelungszustand ist, in dem das Laufrad aus dem Aufnahmevolumen entfernt werden kann.

2. Fahrrad-Parkiersystem (2, 2a-b, 6a-c, 7, 8, 9, 10a-b) gemäss Anspruch 1, wobei der Schliessmechanismus (7, 7a-c) durch zwei Zangenelemente (7a-b) bereitgestellt wird, die dazu ausgelegt sind, das in das Aufnahmevolumen geführte Laufrad (3,4, 5) zu umschliessen.

3. Fahrrad-Parkiersystem (2, 2a-b, 6a-c, 7, 8, 9, 10a-b) gemäss Anspruch 2, wobei der Schliessmechanismus (7, 7a-c) so ausgelegt ist, dass die zwei Zangenelemente (7a-b) durch eine vom Laufrad (3,4, 5) auf eine Auflagefläche (7c), die mit den zwei Zangenelementen (7a-b) mittelbar oder unmittelbar verbunden ist und auf der ein Teil des Laufrads (3, 4, 5) nach Einführung in das Aufnahmevolumen aufliegt, ausgeübte Gravitationskraft bewegt werden, wobei der Schliessmechanismus so ausgebildet ist, dass sich die zwei Zangenelemente beim Schalten vom Aufnahmezustand in den Verriegelungszustand und vom Verriegelungszustand in den Entriegelungszustand bewegen.

4. Fahrrad-Parkiersystem (2, 2a-b, 6a-c, 7, 8, 9, 10a-b) gemäss einem der vorherigen Ansprüche, aufweisend ein Identifizierungs- und Kontrollelement (6a-c), wobei das Identifizierungs- und Kontrollelement wenigstens dazu ausgelegt ist, durch eine Identifizierung eine Identität eines Nutzers des Fahrrad-Parkiersystems zu empfangen, und wobei das Verriegeln oder Entriegeln auf der vom Identifizierungs- und Kontrollelement (6a-c) empfangenen Identität eines Nutzers basiert.

5. Fahrrad-Parkiersystem (2, 2a-b, 6a-c, 7, 8, 9, 10a-b) gemäss einem der vorherigen Ansprüche, wobei der Schliessmechanismus (7, 7a-c) ein elektromechanisches Schloss aufweist, wobei das elektromechanische Schloss so ausgelegt ist, dass nach der Identifizierung, falls der Schliessmechanismus im Aufnahme- bzw. Entriegelungszustand ist, das Schalten vom Aufnahme- bzw. Entriegelungszustand in den Verriegelungszustand, insbesondere durch die auf die Auflagefläche wirkende, vom Laufrad hervorgerufene Gravitationskraft bewirkt, ermöglicht ist, und dass nach der Identifizierung, falls der Schliessmechanismus im Verriegelungszustand ist, das Schalten vom Verriegelungszustand in den Aufnahme- bzw. Entriegelungszustand, insbesondere durch ein Entfernen des Laufrads von der Auflagefläche, ermöglicht ist.

6. Fahrrad-Parkiersystem (2, 2a-b, 6a-c, 7, 8, 9, 10a-b) gemäss einem der vorherigen Ansprüche, aufweisend ein Andockelement, wobei das Andockelement das Fahrrad-Parkiersystem fest mit einem Untergrund verbindet, auf dem das Fahrrad-Parkiersystem angebracht ist.

7. Fahrrad-Parkiersystem (2, 2a-b, 6a-c, 7, 8, 9, 10a-b) gemäss einem der vorherigen Ansprüche, wobei das Radhalteelement dazu ausgelegt ist, ein Laufrad (3,4, 5) aufzunehmen, das einen Reifeninnendurchmesser (4) zwischen 300 mm (12") und 740 mm (29") aufweist.

8. Fahrrad-Parkiersystem (2, 2a-b, 6a-c, 7, 8, 9, 10a-b) gemäss einem der Ansprüche 4 bis 7, aufweisend eine erste, insbesondere rote, LED-Lampe (light emitting diode) (10a) und eine zweite, insbesondere grüne, LED-Lampe (10b), wobei das Identifizierungs- und Kontrollelement (6a-c) dazu ausgelegt ist, die erste LED-Lampe und die zweite LED-Lampe zu steuern, und wobei das Identifizierungs- und Kontrollelement dazu ausgelegt ist, die erste LED-Lampe bei einem Schalten vom Aufnahme- bzw. Entriegelungszustand in den Verriegelungszustand und im Verriegelungszustand zu aktivieren, und wobei das Identifizierungs- und Kontrollelement dazu ausgelegt ist, die zweite LED-Lampe im Aufnahme- bzw. Entriegelungszustand zu aktivieren.

9. Fahrrad-Parkiersystem (2, 2a-b, 6a-c, 7, 8, 9, 10a-b) gemäss einem der Ansprüche 4 bis 8, wobei das Identifizierungs- und Kontrollelement (6a-c) einen RFID-Leser (radio-frequency identification) (6b) aufweist.

10. Fahrrad-Parkiersystem (2, 2a-b, 6a-c, 7, 8, 9, 10a-b) gemäss einem der vorherigen Ansprüche, wobei das Fahrrad-Parkiersystem eine Batterie (8) aufweist, die dazu ausgelegt ist, das Identifizierungs- und Kontrollelement (6a-c) und den Schliessmechanismus (7) mit elektrischer Energie zu versorgen.

11. Fahrrad-Parkiersystem (2, 2a-b, 6a-c, 7, 8, 9, 10a-b) gemäss einem der Ansprüche 4 bis 10, wobei das Schalten vom Aufnahme- bzw. Entriegelungszustand in den Verriegelungszustand bzw. vom Verriegelungszustand in den Aufnahme- bzw. Entriegelungszustand nach der Identifizierung für eine vordefinierte Zeit möglich ist, die insbesondere 30 Sekunden entspricht.
